**Europäisches Patentamt**

**European Patent Office**

**Office européen des brevets**

(19)

(11) Veröffentlichungsnummer: **0 217 113**
**B1**

(12) # EUROPÄISCHE PATENTSCHRIFT

(45) Veröffentlichungstag der Patentschrift:
28.02.90

(51) Int. Cl.⁴: **C10B 39/02**, F27D 9/00,
F27D 1/12, F27B 7/38

(21) Anmeldenummer: 86111679.6

(22) Anmeldetag: 22.08.86

(54) **Drehrohrkühler.**

(30) Priorität: 01.10.85 DE 3534991

(43) Veröffentlichungstag der Anmeldung:
08.04.87 Patentblatt 87/15

(45) Bekanntmachung des Hinweises auf die Patenterteilung:
28.02.90 Patentblatt 90/9

(84) Benannte Vertragsstaaten:
AT BE CH DE FR GB IT LI NL SE

(56) Entgegenhaltungen:
EP-A- 0 140 401
GB-A- 2 158 933
US-A- 1 617 815
US-A- 3 356 352

(73) Patentinhaber: MAN Gutehoffnungshütte
Aktiengesellschaft,
Bahnhofstrasse, 66 Postfach 11 02 40,
D-4200 Oberhausen 11(DE)

(72) Erfinder: Haacker, Heinz, Friedhofsweg 24,
D-5910 Kreuztal-Ferndorf(DE)
Erfinder: Wensing, Helmut, Am Ellenbogen 40,
D-4300 Essen 11(DE)

ACTORUM AG

## Beschreibung

Die Erfindung betrifft einen Drehrohrkühler mit einer umlaufenden Trommel zur indirekten Flüssigkeitskühlung von staubförmigem bis körnigem Gut und zur Ausnutzung des aufgeheizten Kühlmediums, wobei auf der Innenseite des Trommelmantels ein Rohrsystem ausgebildet ist, durch das flüssiges Kühlmedium geleitet wird.

Der Drehrohrkühler soll u.a. für die Kühlung von Petrolkoksen geeignet sein. Vor der Weiterverarbeitung wird der bei der Verkokung von Destillationsrückständen gewonnene Rohkoks kalziniert, d.h. unter Sauerstoffausschluß auf bis zu 1.400 °C erhitzt, wobei der Anteil an flüchtigen Bestandteilen reduziert wird und Petrolkoks entsteht.

Der aus dem Kalzinierverfahren kommende Petrolkoks muß anschließend so weit herabgekühlt werden, daß eine Förderung und Bunkerung desselben möglich ist, d.h. die Petrolkokstemperatur nach der Kühlung soll zwischen 150 °C und 100 °C liegen.

Für die Kühlung von Petrolkoks werden daher Kühler verwendet. Es handelt sich um Trommeln, die in einem Wasserbad rotieren. Der Rotor ist außerhalb des Wasserbades gelagert und für den Antrieb ist ein Elektromotor mit Getriebe vorgesehen. Das Wasser für die Kühlung im Wasserbadbehälter wird über Luftkühler zurückgekühlt und über Umlaufpumpen wieder in den Drehkühler gebracht.

In der US-A-3 356 352 wird ein Drehrohrkühler zum Kühlen von pulverigem bis feinkörnigem Gut mit einer umlaufenden Trommel beschrieben. Dieser Kühler ist in zwei Sektionen aufgeteilt. In der ersten Sektion wird das Gut durch direkten Wärmeaustausch gekühlt und in der zweiten Sektion findet eine Kühlung durch indirekten Wärmeaustausch statt. An der Innenseite des Trommelmantels der zweiten Sektion ist ein Rohrsystem für die indirekte Flüssigkeitskühlung ausgebildet.

Der Drehrohrkühler nach der US-A-1 617 815 ist mit einem Rohrsystem an der Trommelinnenseite ausgerüstet, in welchem Kühlflüssigkeit zirkuliert.

In der EP-A-0 140 401 werden Kühlpanels für einen Elektroofen beschrieben, die sich aus einer Vielzahl von gewundenen Rohren zusammensetzen. Diese Panels haben keine tragende Funktion, sondern stützen sich an der Innenwand des Ofens ab.

Ausgehend von einem Stand der Technik, der Drehrohrkühler mit einem Rohrsystem für Flüssigkeitskühlung und Ausnutzung der Wärme des aufgeheizten Kühlmediums beschreibt, ist es Aufgabe der Erfindung, einen Drehrohrkühler zum indirekten Kühlen von staubförmigem bis körnigem Gut, beispielsweise Petrolkoks, zu schaffen, dessen Gestaltung eine Reduzierung des Konstruktionsgewichtes zuläßt und in dessen Rohrsystem für die Flüssigkeitskühlung Hochdruckdampf erzeugt werden kann.

Die Lösung dieser Aufgabe geschieht in der Weise, daß der Trommelmantel des Drehrohrkühlers durch das Rohrsystem selbst gebildet wird und daß die Unterteilung dieses Rohrsystems in einen ersten Teil mit mäandrisch verlaufenden Rohren, in denen Hochdruckdampf erzeugt wird, sowie in einen zweiten Teil mit spiraligen Rohren vorgenommen wird.

Im Gegensatz zum Stand der Technik wird also nach der Erfindung anstelle des separaten Trommelmantels ein tragendes Trommelgehäuse aus zusammengeschweißten Rohren gebildet. Dies hat insofern wirtschaftliche Vorteile, als Konstruktionsgewicht und Antriebsenergie für den Drehtrommelantrieb gespart werden.

Die Mäander bzw. Spiralen sind untereinander verschweißt und bilden einen Mantel in Rohr-Rohr-Konstruktion. Die Zu- und Ableitung des Kühlmediums in die Kühlrohre erfolgt über Drehgelenke.

Das zu kühlende staubförmige bis feinkörnige Gut wird über eine Schurre zentrisch in den Drehrohrkühler aufgegeben und am entgegengesetzten Ende über eine ebenfalls zentrisch angeordnete Austragsschurre abgezogen.

Sofern der Drehrohrkühler für stark schleißendes Gut, wie z.B. Petrolkoks verwendet werden soll, können die gefährdeten Bereiche, wie Schurre und der Innenmantel des Drehrohrkühlers, mit einer Beschichtung versehen sein, die Schutz gegen abrasiven Verschleiß bietet.

Die bevorzugte Ausführungsform für die Kühlung von Petrolkoks sieht vor, daß der erste Teil des Drehrohrkühlers als Verdampfungsteil ein in Längsrichtung des Kühlers verlaufendes mäandrisches Rohr aufweist. Das Kühlmedium tritt an der Aufgabeseite des Drehrohrkühlers über ein Drehgelenk ein und ebenfalls aufgabeseitig wieder aus. Der erste Teil des Kühlers wird also im Gleich- und Gegenstrom betrieben.

Der zweite Teil des Trommelmantels ist als Spiralrohr ausgebildet. Hier tritt das Kühlmedium an der Austragsseite des Drehrohrkühlers ein, strömt im Gegenstrom zum zu kühlenden Gut durch die Rohrspirale und verläßt die Spirale über ein in Längsrichtung des Drehrohrkühlers mittig verlaufendes Rohr am Drehrohrkühlerende.

Die aufgeheizten Kühlmedien aus den beiden getrennten Rohrsystemen werden anschließend einer Abwärmeausnutzungseinrichtung zugeführt.

Nachfolgend wird unter Bezugnahme auf die schematischen Zeichnungen ein Ausführungsbeispiel des erfindungsgemäßen Drehrohrkühlers näher erläutert.

Es zeigen:

Fig. 1 einen Längsschnitt eines Drehrohrkühlers und

Fig. 2 einen Querschnitt gem. der Linie A-A von Fig. 1.

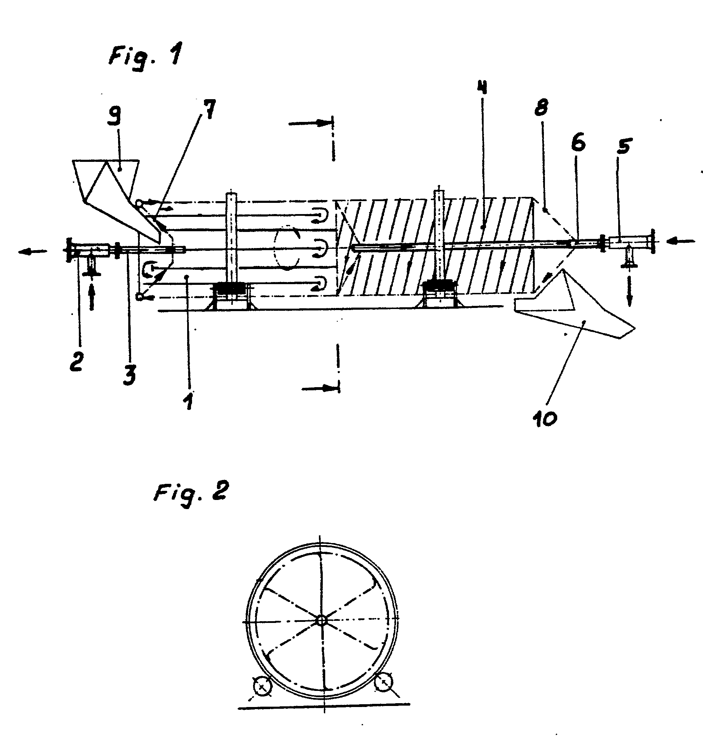

Der Längsschnitt der Figur 1 stellt einen Drehrohrkühler dar, der aus zwei getrennten Kühlsystemen besteht. Der Trommelmantel des Drehrohrkühlers besteht im ersten Teil aus mäandrisch verlaufenden Rohren 1. Die Mäander sind untereinander verschweißt. Über ein Drehgelenk 2 und ein Doppelmantelrohr 3 wird das Kühlmedium in Pfeilrichtung in das Mäanderrohr 1 eingeführt.

Der erste Teil des Drehrohrkühlers ist als Verdampfungsteil ausgeführt und wird im Gleich- und Gegenstrom betrieben. Das aufgeheizte Kühlmedium, beispielsweise Wasser, verläßt die mäandrischen Rohre 1 über das Doppelmantelrohr 3 und das Drehgelenk 2 in Pfeilrichtung an der Aufgabeseite des Drehrohrkühlers.

Der zweite Teil des Drehrohrkühlers wird von einem Trommelmantel gebildet, der aus Spiralrohren 4 hergestellt ist. Die Windungen der spiraligen Rohre sind untereinander verschweißt. Das Kühlmedium tritt über ein Drehgelenk 5 und ein Doppelmantelrohr 6 in das Spiralrohr 4 in Pfeilrichtung ein und das aufgeheizte Medium verläßt über das in der Mitte der Trommel in Trommellängsrichtung verlaufende Rohr 6 sowie das Drehgelenk 5 in Pfeilrichtung den Drehrohrkühler und gelangt in eine (nicht dargestellte) Anlage zur Abwärmeausnutzung.

Der aus Rohren 1 und 4 gebildete Trommelmantel des Drehrohrkühlers nimmt im Innern das zu kühlende Material auf. Sofern es sich dabei um stark schleißendes Gut wie beispielsweise Petrolkoks handelt, werden die Kühlrohre hinsichtlich ihrer Wandstärke entsprechend dickwandig dimensioniert. Andererseits ist es auch möglich, die Innenwandung der Trommel, die aus den Kühlrohren 1 und 4 gebildet ist, mit einer Beschichtung, z.B. im Schweißplattierungsverfahren, zu versehen.

Während beim Kühlen von Petrolkoks wegen dessen guter Rieselfähigkeit keine Gefahr besteht, daß sich das zu kühlende Material in die Furchen der Mäander bzw. Spirale setzt, könnte dies bei zu Anbackungen neigendem Material der Fall sein. Dies ist jedoch nicht problematisch, denn das sich in einem derartigen Fall in die Furchen setzende Material stellt andererseits einen Verschleißschutz für die Rohre dar. Im übrigen ist es, wenn die Anbackungen die gesamte Trommelinnenfläche bedecken sollten, durchaus bekannt, umlaufende Schaber oder dergleichen zur Beseitigung von Anbackungen zu verwenden.

Die beiden Stirnseiten des Drehrohrkühlers werden ebenfalls zum größten Teil von den Rohren 1 und 4 gebildet. Zum anderen Teil bestehen sie aus Mantelblechen. Die Stirnwände 7 und 8 sind ringförmig mit zentralen Öffnungen für die Aufgabe bzw. den Austrag des Kühlgutes versehen. Mit 9 ist die Aufgabeschurre und mit 10 die Austragsschurre des Drehrohrkühlers bezeichnet.

Zur Verbesserung der Materialförderung innerhalb des Drehrohrkühlers weist dieser eine geringe Neigung zum Austragsende hin auf. Sie liegt beispielsweise bei 2°.

Der Antrieb des Drehrohrkühlers zur Drehung der Trommel um die Mittelachsrichtung erfolgt in bekannter Weise z.B. über einen Elektromotor, der ein Ritzel antreibt, das wiederum in ein auf dem Trommelaußenmantel montiertes Umfangszahnrad eingreift.

## Patentansprüche

1. Drehrohrkühler mit einer umlaufenden Trommel zur indirekten Flüssigkeitskühlung von staubförmigem bis körnigem Gut und zur Ausnutzung des aufgeheizten Kühlmediums, wobei auf der Innenseite des Trommelmantels ein Rohrsystem ausgebildet ist, durch das flüssiges Kühlmedium geleitet wird, dadurch gekennzeichnet, daß das Rohrsystem selbst den Trommelmantel bildet, der aus zwei getrennten Rohrsystemen besteht, nämlich einem ersten mäandrisch verlaufenden, zur Erzeugung von Hochdruckdampf vorgesehenen Rohrsystem (1) und einem den zweiten Teil des Trommelmantels bildenden spiraligen Rohrsystem (4), wobei die Spiralen und Mäander untereinander verschweißt sind.

2. Drehrohrkühler nach Anspruch 1, dadurch gekennzeichnet, daß die Zuleitung des Kühlmediums und die Ableitung des aufgeheizten Kühlmediums über Drehgelenke (2, 5) erfolgt.

3. Drehrohrkühler nach den Ansprüchen 1 und 2, dadurch gekennzeichnet, daß dem Drehrohrkühler ein System zur Ausnutzung des im Drehrohrkühler erzeugten Hochdruckdampfes nachgeschaltet ist.

## Claims

1. Rotating cylindrical cooler with a revolving drum for the indirect fluid-cooling of powdery or granular material and for the use of a heated cooling medium in which the inner side of the drum is provided with a system of tubes through which the cooling medium is passed, and characterised in that the system of tubes itself comprises the jacket of the drum, and consists of two separate tube systems, a first system (1) of meandering configuration for the production of high-pressure vapour, and a spiral-shaped tube system (4) forming the second part of the drum jacket, the spiral and meandering tubes being welded together.

2. Rotating cylindrical cooler according to claim 1, and characterised in that the cooling medium enters the drum and the heated cooling medium leaves the drum through rotating joints (2, 5).

3. Rotating cylindrical cooler according to claim 1 or 2, and characterised in that the rotating cylindrical cooler has attached to it a system for making use of the high-pressure vapour produced in the rotating cylindrical cooler.

## Revendications

1. Refroidisseur à tube tournant comportant un tambour tournant destiné à refroidir indirectement par un liquide un produit poudreux à granuleux et à exploiter le milieu de refroidissement réchauffé, un système tubulaire à travers lequel le milieu de refroidissement liquide est guidé, étant réalisé à l'intérieur de l'enveloppe du tambour, caractérisé en ce que le système tubulaire lui-même, constitue l'enveloppe de tambour et se compose de deux systèms tubulaires séparés, à savoir un premier système tubulaire (1) s'étendant en méandres et prévu pour produire de la vapeur haute pression, et un système tubulaire (4) en spirale constituant la deuxième partie de l'enveloppe de tambour, les spirales et les méandres étant soudés ensemble.

2. Refroidisseur à tube tournant selon la revendication 1, caractérisé en ce que l'amenée du milieu de refroidissement et l'évacuation du milieu de refroidissement réchauffé s'effectuent par l'intermédiaire d'articulations tournantes (2, 5).

3. Refroidisseur à tube tournant selon les revendications 1 et 2, caractérisé en ce qu'un système d'exploitation de la vapeur à haute pression produite dans le refroidisseur à tube tournant est placé en aval du refroidisseur à tube tournant.

Fig. 1

Fig. 2